# EUROPEAN PATENT APPLICATION

(11) **EP 2 667 621 A1**
(43) Date of publication of application: **27.11.2013**
(21) Application number: 13152484.5
(22) Date of filing: 24.01.2013
(51) Int. Cl.: H04N 17/04

(54) **Electronic apparatus, control method of an electronic apparatus, control program of an electronic apparatus, and video display apparatus**

(30) Priority: 22.05.2012 JP 2012117030
(71) Applicant: Kabushiki Kaisha Toshiba, Tokyo 105-8001 (JP)
(72) Inventor: Higuchi, Yasukazu, Tokyo, 105-8001 (JP); Ohwaki, Kazuyasu, Tokyo, 105-8001 (JP); Isogawa, Kenzo, Tokyo, 105-8001 (JP)
(74) Representative: HOFFMANN EITLE

(57) **Abstract**

According to one embodiment, an electronic apparatus includes: an imaging module configured to shoot a video display apparatus on which a first image is displayed, and output a shot image; a calibrating module configured to perform camera calibration using the first image in the output shot image; a calculating module configured to calculate information to be used for image quality adjustments of the video display apparatus using results of the camera calibration and the shot image; and a transmitting module configured to transmit the calculated image quality adjustment information to the video display apparatus.

## Description

### CROSS REFERENCE TO RELATED APPLICATION(S)

The application is based upon and claims the benefit of priority from Japanese Patent Application No. 2012-117030 filed on May 22, 2012, the entire contents of which are incorporated herein by reference.

### BACKGROUND

### 1. Field

The present invention relates to an electronic apparatus, a control method of an electronic apparatus, a control program of an electronic apparatus, and a video display apparatus.

### 2. Description of the Related Art

In recent years, with the spread of the digital broadcast, video display apparatus such as TV receivers and portable apparatus which receive a digital broadcast and display its video have come into wide use.

In these video display apparatus, it is desired to further improve the image quality of video that is displayed on their video display screens. In recent years, video display apparatus which are equipped with a sensor, for example, and can adjust the image quality of a displayed image automatically have been provided.

### BRIEF DESCRIPTION OF THE DRAWINGS

A general configuration that implements the various features of embodiments will be described with reference to the drawings. The drawings and the associated descriptions are provided to illustrate embodiments and not to limit the scope of the embodiments.
Fig. 1 shows appearances of an electronic apparatus (tablet PC) and a video display apparatus (TV receiver) according to the embodiment.
Fig. 2 is a block diagram showing an example configuration of the electronic apparatus (tablet PC) according to the embodiment.
Fig. 3 is a block diagram showing an example configuration of the video display apparatus (TV receiver) according to the embodiment.
Fig. 4 is a block diagram showing example functional configurations of the electronic apparatus (tablet PC) and the video display apparatus (TV receiver) according to the embodiment.
Fig. 5 is a flowchart of a process which is executed by the electronic apparatus (tablet PC) according to the embodiment.
Fig. 6 is a flowchart of a process which is executed by the video display apparatus (TV receiver) according to the embodiment.

### DETAILED DESCRIPTION

An embodiment will be hereinafter described with reference to the drawings.

According to one embodiment, an electronic apparatus includes: an imaging module configured to shoot a video display apparatus on which a first image is displayed, and output a shot image; a calibrating module configured to perform camera calibration using the first image in the output shot image; a calculating module configured to calculate information to be used for image quality adjustments of the video display apparatus using results of the camera calibration and the shot image; and a transmitting module configured to transmit the calculated image quality adjustment information to the video display apparatus.

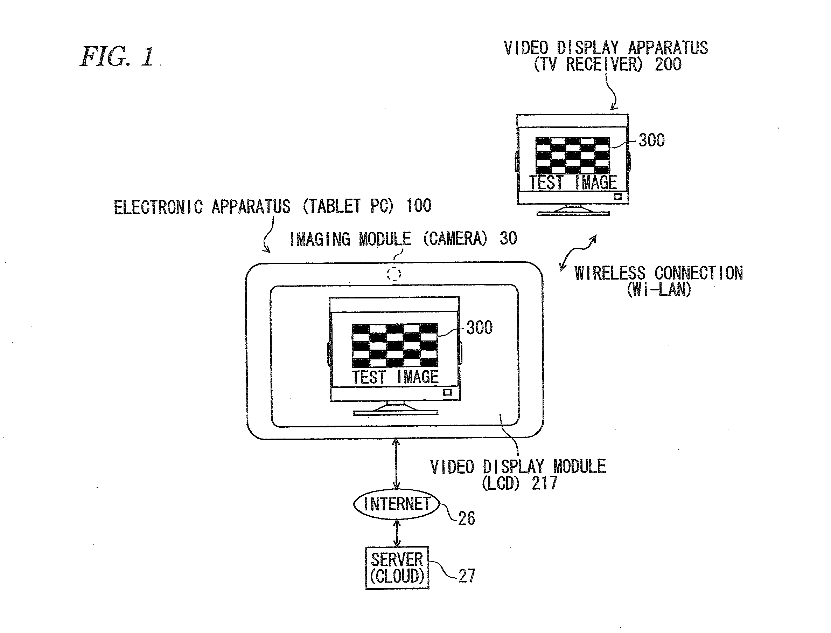

Fig. 1 shows appearances of an electronic apparatus (tablet PC) 100 and a video display apparatus (TV receiver) 200 which are an electronic apparatus and a video display apparatus according to the embodiment, respectively. As shown in Fig. 1, in the embodiment, the electronic apparatus (tablet PC) 100 and the video display apparatus (TV receiver) 200 are connected to each other wirelessly (e.g., Wi-LAN) and hence can communicate with each other. However, the electronic apparatus (tablet PC) 100 and the video display apparatus (TV receiver) 200 need not always connected to each other wirelessly; it suffices that they be configured so as to communicate with each other (e.g., the connection may be wired connection).

The invention can be applied to electronic apparatus other than a tablet PC, such as portable terminals as exemplified by a smartphone and a cell phone. The invention can also be applied to video display apparatus other than a TV receiver, such as a tablet PC, a smart phone, and a cell phone.

The user manipulates the electronic apparatus (tablet PC) 100, for example, so that the electronic apparatus (tablet PC) 100 instructs the video display apparatus (TV receiver) 200 to display a first image (e.g. , test image 300). The video display apparatus (TV receiver) 200 may be configured so as to store the first image (test image 300). To accommodate a case that plural video display apparatus exist, the electronic apparatus (tablet PC) 100 may be configured so as to be stored with plural first images (test images). As a further alternative, to accommodate a case that plural video display apparatus exist, the system may be configured so that a cloud server 27 is stored with plural first images (test images).

Then, the user shoots the video display apparatus (TV receiver) 200 on which the first image (test image 300) is displayed together with a background using an imaging module 30 of the electronic apparatus (tablet PC) 100, for example, and obtains a shot image.

The electronic apparatus (tablet PC) 100 performs camera calibration using the first image (test image 300) in the shot image. The electronic apparatus (tablet PC) 100maybe configured so as to acquire information for increasing the accuracy of the calibration such as a model name and an inch number of the adjustment subject video display apparatus (TV receiver) 200 from the video display apparatus (TV receiver) 200 and to use the acquired information.

The electronic apparatus (tablet PC) 100 calculates information to be used for image quality adjustments of the video display apparatus (TV receiver) 200 using calibration results and the shot image. The electronic apparatus (tablet PC) 100 sends the calculated image quality adjustment information to the video display apparatus (TV receiver) 200.

The video display apparatus (TV receiver) 200 receives the calculated image quality adjustment information and performs image quality adjustments on itself using the received image quality adjustment information.

The camera calibration will be described below. An image taken by the imaging module (e.g., web camera) 30 in the above-described manner tends to be distorted due to the aberrations, focal length, etc. of the camera 30. A shot image can be displayed at a specified position more accurately by determining characteristics (aberrations, focal length, etc.) of the camera 30 in advance and applying them to formulae for calculating marker positions and a posture, for example. In the embodiment, this operation is called the camera calibration.

Next, a description will be made of the image quality adjustments of the video display apparatus (TV receiver) 200.

In general, video display apparatus are in various environments. Example environment factors are the room brightness, whether illumination light shines on the video display apparatus (directly or indirectly), and whether external light shines on the video display apparatus. Therefore, it is desirable to perform image quality adjustments that are suitable for an environment.

The image quality adjustments include a brightness adjustment and a contrast adjustment (e.g., an adjustment of a light/dark luminance difference). Where the video display apparatus is a liquid crystal TV receiver, a backlight luminance adjustment (e.g., white/black balance adjustment) is performed. In certain cases, the image quality adjustments may include a color temperature adjustment or a color depth adjustment.

In the embodiment, as described above, information to be used for image quality adjustments of the video display apparatus (TV receiver) 200 (image quality adjustment information) is calculated using calibration results and a shot image. The calculated image quality adjustment information is sent to the video display apparatus (TV receiver) 200.

For example, the electronic apparatus (tablet PC) 100 according to the embodiment is connected to the cloud server 27 via the Internet 26. For example, the system may be configured so that an image taken by the electronic apparatus (tablet PC) 100 is sent to the cloud server 27 and all or part of the camera calibration and the processing of calculating image quality adjustment information using calibration results and the shot image are performed by the cloud server 27. Also in this case, the video display apparatus (TV receiver) 200 receives the calculated image quality adjustment information and performs image quality adjustments on itself using the received image quality adjustment information.

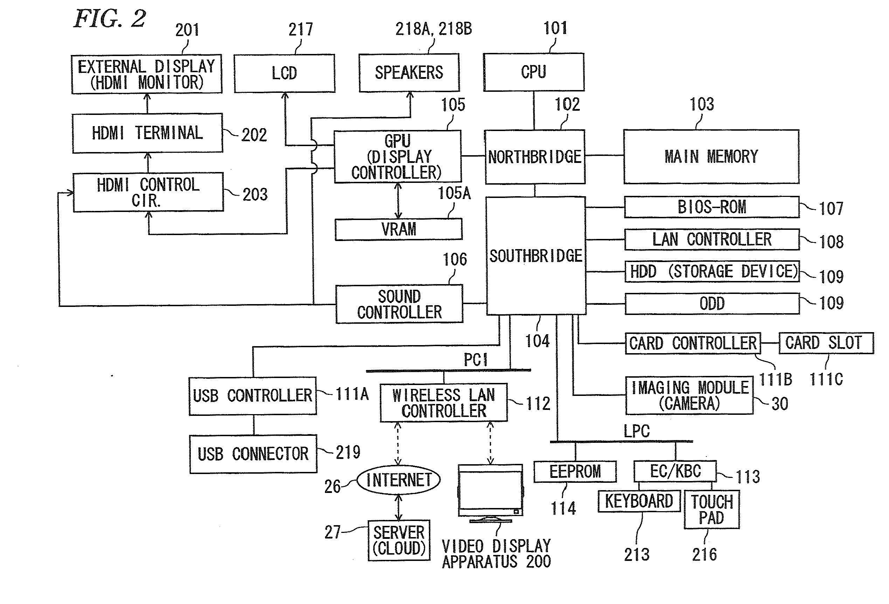

Fig. 2 is a block diagram showing an example configuration of the electronic apparatus (tablet PC) 100 according to the embodiment. For example, the electronic apparatus (tablet PC) 100 is equipped with a CPU (central processing module) 101, a northbridge 102, a main memory 103, a southbridge 104, a GPU (graphics processing module) 105, a VRAM (video random access memory) 105A, a sound controller 106, a BIOS-ROM (basic input/output system-read only memory) 107, a LAN (local area network) controller 108, a hard disk drive (HDD; storage device) 109, an optical disc drive (ODD) 110, a USB controller 111A, a card controller 111B, a wireless LAN controller 112, an embedded controller/keyboard controller (EC/KBC) 113, an EEPROM (electrically erasable programmable ROM) 114, etc.

The CPU 101 is a processor which controls operations of individual components of the electronic apparatus (tablet PC) 100. The CPU 101 runs a BIOS which is stored in the BIOS-ROM 107. The BIOS is programs for hardware control.

The northbridge 102 is a bridge device which connects a local bus of the CPU 101 to the southbridge 104. The northbridge 102 incorporates a memory controller for access-controlling the main memory 103. The northbridge 102 also has a function of performing a communication with the GPU 105 via, for example, a serial bus that complies with the PCI Express standard.

The GPU 105 is a display controller which controls a video display module (LCD) 217 which is used as a display monitor of the electronic apparatus (tablet PC) 100. A display signal generated by the GPU 105 is sent to the video display module (LCD) 217. The GPU 105 can also send a digital video signal to an external display 201 via an HDMI control circuit 203 and an HDMI terminal 202.

The HDMI terminal 202 is an external display connection terminal. The HDMI terminal 202 can send a non-compressed digital video signal and digital audio signal to the external display 201 such as a video display apparatus via a single cable. The HDMI control circuit 203 is an interface for sending a digital video signal to the external display 201 (called an HDMI monitor) via the HDMI terminal 202.

The southbridge 104 controls individual devices on a PCI (peripheral component interconnect) bus and individual devices on an LPC (low pin count) bus. The southbridge 104 incorporates an IDE (integrated drive electronics) controller for controlling the HDD 109 and the ODD 110. The southbridge 104 also has a function of performing a communication with the sound controller 106.

The sound controller 106, which is a sound source device, outputs reproduction subject audio data to speakers 18A and 18B or the HDMI control circuit 203. The LAN controller 108 is a wired communication device which performs a wired communication according to the IEEE 802.3 standard, for example. On the other hand, the wireless LAN controller 112 is a wireless communication device which performs a wireless communication according to the IEEE 802.11g standard, for example.

The USB controller 111A performs a communication with an external device (connected to it via a USB connector 219) which complies with the USB 2.0 standard, for example. For example, the USB controller 111A is used for receiving an image data file from a digital camera. The card controller 111B writes and reads data to and from a memory card such as an SD card that is inserted in a card slot 111C that is formed in a computer main body of the electronic apparatus (tablet PC) 100.

The EC/KBC 113 is a one-chip microcomputer in which an embedded controller for power management and a keyboard controller for controlling a keyboard 213 and a touch pad 216 are integrated together. The EC/KBC 113 has a function of powering on/off the electronic apparatus (tablet PC) 100 in response to a user manipulation of a power button.

In the embodiment, a display control is performed in such a manner that, for example, the CPU 101 runs programs stored in the main memory 103, the HDD 109, etc.

The above configuration is just an example, and the electronic apparatus (tablet PC) 100 may have a hardware configuration that is different from the above-described one.

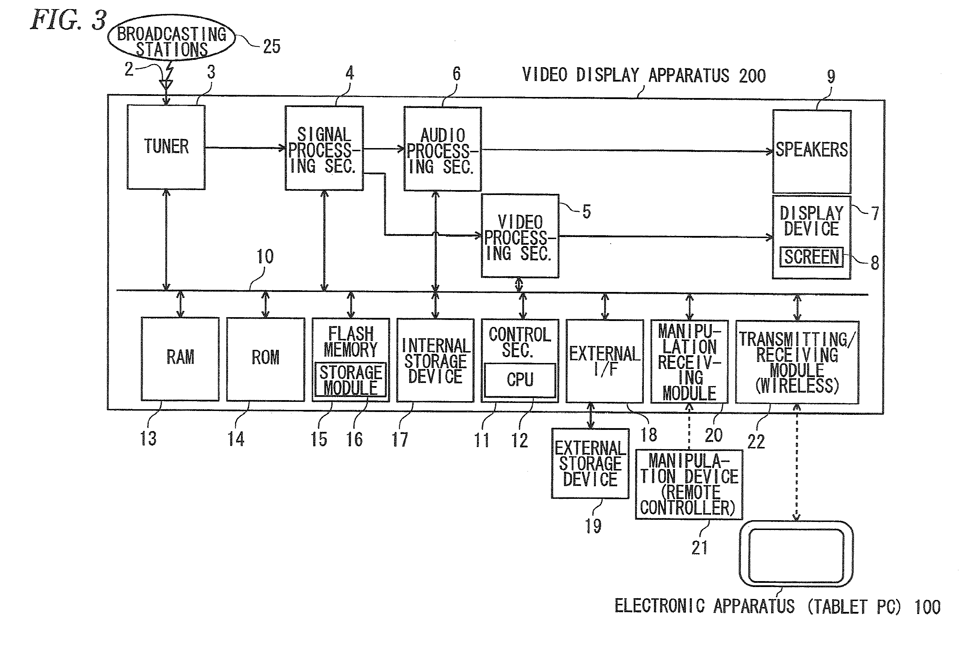

Fig. 3 is a block diagram showing an example configuration of the video display apparatus (TV receiver) 200 according to the embodiment. In the embodiment, a control module 11 is equipped with a CPU 12 which controls the video display apparatus (TV receiver) 200. A RAM 13, a ROM 14, and a flash memory 15 are used for, for example, processing that is performed by the control module 11. The flash memory 15 can also store pieces of information of apparatus that are set in the system and preset user information.

For example, video contents are broadcast from broadcasting stations 25 by digital broadcast. A tuner 3 receives the broadcast video contents and tunes in to one of them. A digital signal of the selected video content is supplied to a signal processing module 4.

The signal processingmodule 4 performs signal processing on the received digital signal of the video content and supplies a resulting audio signal and video signal to an audio processing module 6 and a video processing module 5, respectively.

The audio processing module 6 performs audio processing on the received audio signal and supplies resulting audio signals to speakers 9. The speakers 9 output a sound on the basis of the received audio signals.

The video processing module 5 performs video processing on the received video signal and supplies a resulting video signal to a display device 7. The display device 7 displays video on a display screen 8 of an LCD panel, for example, on the basis of the received video signal.

In the embodiment, the video display apparatus (TV receiver) 200 is equipped with an internal storage device 17 which can record received broadcast programs and reproduces a recorded broadcast program.

In the embodiment, an external storage device 19 is USB or LAN-connected to the video display apparatus (TV receiver) 200. Received broadcast programs can also be recorded in the external storage device 19.

A user manipulation is performed on the video display apparatus (TV receiver) 200 using a manipulation device such as a remote controller 21.

The above-described pieces of processing are controlled by the control module 11.

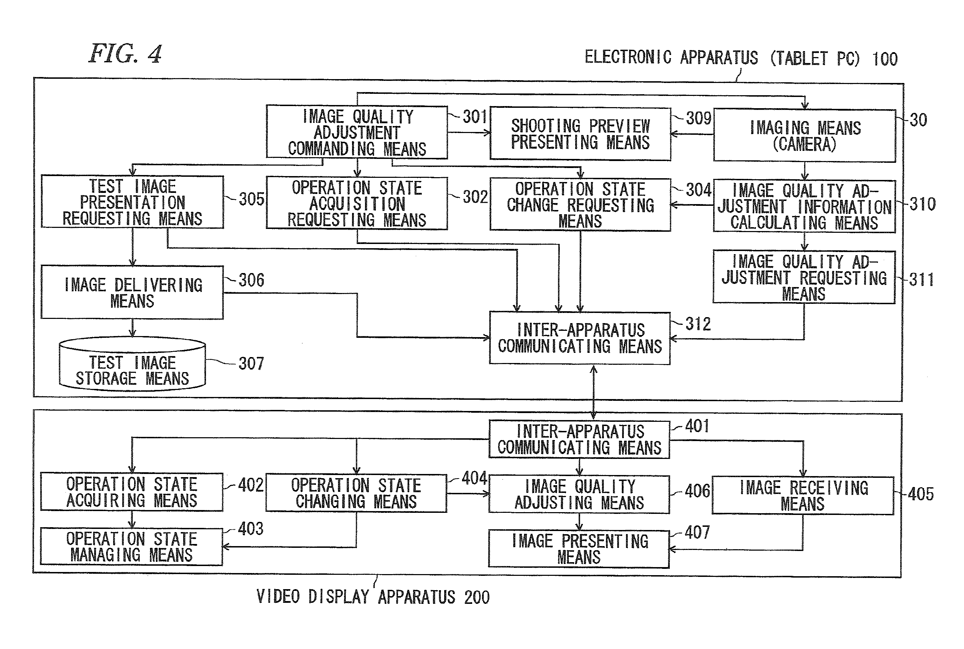

Fig. 4 is a block diagram showing example functional configurations of the electronic apparatus (tablet PC) 100 and the video display apparatus (TV receiver) 200 according to the embodiment. As described above with reference to Fig. 1, in the embodiment, the electronic apparatus (tablet PC) 100 and the video display apparatus (TV receiver) 200 are connected to each other wirelessly (e.g., Wi-LAN) and hence can communicate with each other.

For example, the electronic apparatus (tablet PC) 100 is equipped with an image quality adjustment commanding means 301, an operation state acquisition requesting means 302, a test image presentation requesting means 305, an image delivering means 306, a test image storage means 307, a shooting preview presenting means 309, an operation state change requesting means 304, an imaging means (camera) 30, an image quality adjustment information calculating means 310, an image quality adjustment requesting means 311, and an inter-apparatus communicating means 312.

The video display apparatus (TV receiver) 200 is equipped with an operation state acquiring means 402, an operation state managing means 403, an operation state changing means 404, an inter-apparatus communicating means 401, an image quality adjusting means 406, an image presenting means 407, and an image receiving means 405.

The inter-apparatus communicating means 312 of the electronic apparatus (tablet PC) 100 and the inter-apparatus communicating means 401 of the video display apparatus (TV receiver) 200 are connected to each other wirelessly (e.g., Wi-LAN) and hence can communicate with each other.

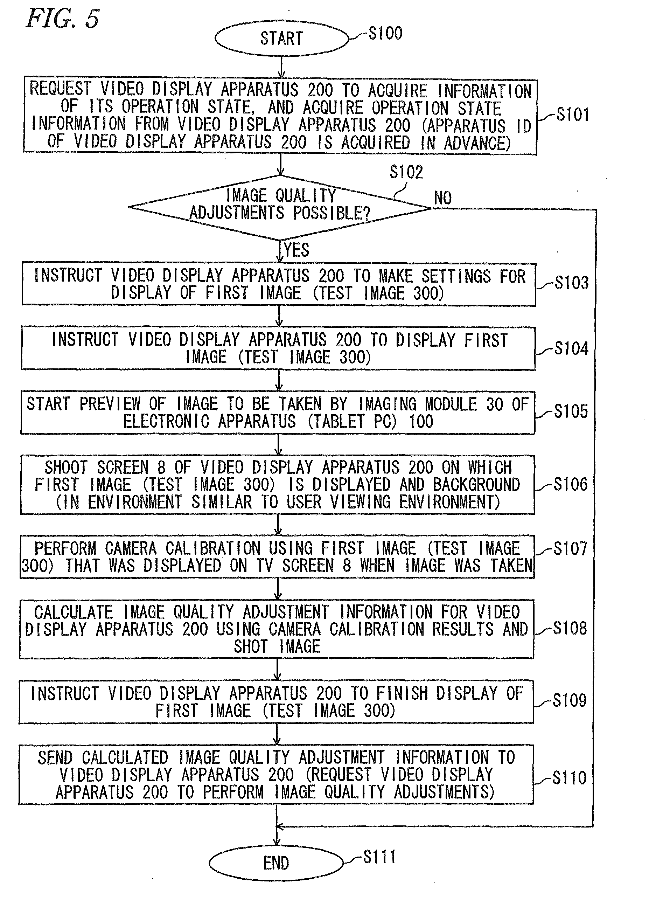

Fig. 5 is a flowchart of a process which is executed by the electronic apparatus (tablet PC) 100 according to the embodiment. The process starts at step S100.

At step S101, the electronic apparatus (tablet PC) 100 requests the video display apparatus (TV receiver) 200 to acquire information of an operation state of the video display apparatus (TV receiver) 200 (e.g., whether or not the video display apparatus (TV receiver) 200 is in such a state as to be able to receive an instruction from the electronic apparatus (tablet PC) 100 and perform image quality adjustments), and acquires operation state information from the video display apparatus (TV receiver) 200. The electronic apparatus (tablet PC) 100 acquires an apparatus ID, for example, of the video display apparatus (TV receiver) 200 in advance and communicates with the video display apparatus (TV receiver) 200 which is a pre-identified, specific video display apparatus.

At step S102, the electronic apparatus (tablet PC) 100 judges whether the image quality of the video display apparatus (TV receiver) 200 can be adjusted, on the basis of the acquired operation state information of the video display apparatus (TV receiver) 200. If it is judged that the image quality of the video display apparatus (TV receiver) 200 can be adjusted (S102: yes), the process moves to step S103. If not (S102: no), the process moves to step S111.

At step S103, the electronic apparatus (tablet PC) 100 instructs the video display apparatus (TV receiver) 200 to make settings for display of a first image (test image 300). At step S104, the electronic apparatus (tablet PC) 100 instructs the video display apparatus (TV receiver) 200 to display the first image (test image 300).

At step S105, the electronic apparatus (tablet PC) 100 starts a preview of an image to be taken by the imaging module 30 of the electronic apparatus (tablet PC) 100 in response to a user manipulation, for example.

At step S106, the user shoots the screen 8 of the video display apparatus (TV receiver) 200 on which the first image (test image 300) is displayed together with a background. It is desirable that, for example, the TV screen 8 and a background be shot in an environment similar to a user viewing environment.

The screen 8 of the video display apparatus (TV receiver) 200 can be shot together with an optimum background area by performing the shooting while superimposing guides on the image displayed on the electronic apparatus (tablet PC) 100 on the basis of inch number information acquired from the video display apparatus (TV receiver) 200 and an optimum viewing distance (between a viewer and the video display apparatus (TV receiver) 200) or user-input actual viewing distance information

At step S107, the electronic apparatus (tablet PC) 100 performs camera calibration using the first image (test image 300) that was displayed on the TV screen 8 when the image was taken.

At step S108, the electronic apparatus (tablet PC) 100 calculates image quality adjustment information for the video display apparatus (TV receiver) 200 using camera calibration results and the shot image. This is done by the image quality adjustment information calculating means 310, for example.

If satisfactory image quality adjustment information cannot be calculated at step S108 on the basis of the shot image because of poor shooting conditions, it is desirable to perform shooting again (not shown in Fig. 5).

For example, in a dark room, if a shot image is corrected so as to be brighter by a camera-side automatic brightness adjustment, a shot test image may be so high in white level as to be improper for use. To prevent such an event, the electronic apparatus (tablet PC) 100 may detect that a shot image is too bright and perform re-shooting automatically under different conditions.

More specifically, this may be done in the following manner. Test images that are different from each other in brightness are prepared in advance. First, a test image having standard brightness is displayed and shot. If a resulting shot image is too bright, a test image whose brightness is lower than the standard brightness is displayed and shot again. Alternatively, the brightness of the backlight may be adjusted.

The above operation may be performed in such a manner that once the user has made a shooting manipulation while holding the electronic apparatus (tablet PC) 100 which incorporates the camera 30 with his or her hands, the electronic apparatus (tablet PC) 100 automatically performs condition adjustments and re-shooting repeatedly until an optimum shot image is obtained.

At step S109, the electronic apparatus (tablet PC) 100 instructs the video display apparatus (TV receiver) 200 to finish the display of the first image (test image 300).

At step S110, the electronic apparatus (tablet PC) 100 sends the calculated image quality adjustment information to the video display apparatus (TV receiver) 200, that is, requests the video display apparatus (TV receiver) 200 to perform image quality adjustments. The process is finished at step S111.

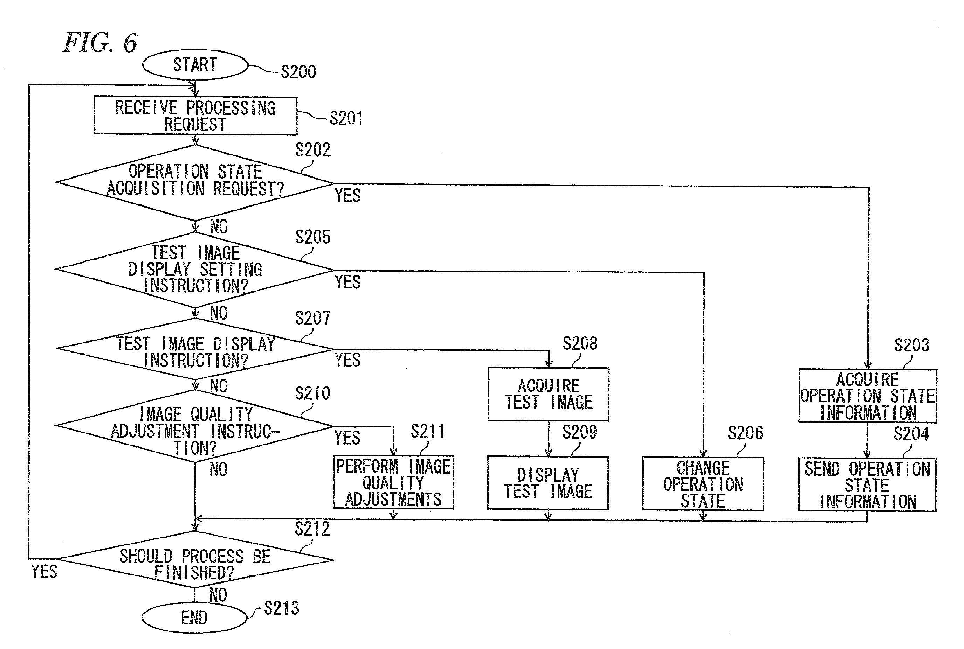

Fig. 6 is a flowchart of a process which is executed by the electronic apparatus (tablet PC) 100 according to the embodiment. The process starts at step S200.

At step S201, the video display apparatus (TV receiver) 200 receives a processing request (instruction) that is transmitted from the electronic apparatus (tablet PC) 100. At step S202, the video display apparatus (TV receiver) 200 judges, on the basis of the received information, whether or not the request from the electronic apparatus (tablet PC) 100 is an instruction to acquire information of an operation state of the video display apparatus (TV receiver) 200. If the request is an operation state acquisition request (S202: yes), the process moves to step S203. If not (S202: no), the process moves to step S205.

At step S203, the video display apparatus (TV receiver) 200 acquires information of its operation state. At step S204, the video display apparatus (TV receiver) 200 sends the acquired operation state information to the electronic apparatus (tablet PC) 100.

At step S205, the video display apparatus (TV receiver) 200 judges whether or not it has received an instruction to make settings for display of a first image (test image 300). If it is judged that an instruction to make settings for display of a first image has been received (S205: yes), the process moves to step S206. If not (S205: no), the process moves to step S207.

At step S206, the video display apparatus (TV receiver) 200 changes its operation state, that is, makes settings (i.e., image quality settings) for display of a first image (test image 300). To display the test image 300 under the same conditions, predetermined image quality setting values are used.

At step S207, the video display apparatus (TV receiver) 200 judges whether or not it has received an instruction to display a first image (test image 300). If it is judged that an instruction to display a first image has been received (S207: yes), the process moves to step S208. If not (S207: no), the process moves to step S210.

At step S208, the video display apparatus (TV receiver) 200 acquires a first image (test image 300). In the embodiment, the first image (test image 300) may be stored in the video display apparatus (TV receiver) 200. Alternatively, plural first images (test images) may be stored in the electronic apparatus (tablet PC) 100 so as to be able to accommodate a case that plural video display apparatus exist. As a further alternative, to accommodate a case that plural video display apparatus exist, plural first images (test images) may be stored in the cloud server 27.

At step S208, the video display apparatus (TV receiver) 200 acquires (receives) a first image (test image 300) fromitself, the electronic apparatus (tablet PC) 100, or the cloud server 27.

At step S209, the displays the acquired first image (test image 300) on the display device 7.

At step S210, the video display apparatus (TV receiver) 200 judges whether to perform image quality adjustments using the image quality adjustment information received from the electronic apparatus (tablet PC) 100. If it is judged that image quality adjustment information should be performed (S210: yes), the process moves to step S211. If not (S210: no), the process moves to step S212.

At step S211, the video display apparatus (TV receiver) 200 performs image quality adjustments using the image quality adjustment information.

At step S212, the video display apparatus (TV receiver) 200 judges whether to continue the process. If it is judged that the process should be continued (S212: yes), the process returns to step S201. If it is judged that the process should be finished (S212: no), the process moves to step S213. The process is finished at step S213.

As shown in Fig. 1, in the embodiment, the electronic apparatus (tablet PC) 100 and the video display apparatus (TV receiver) 200 are connected to each other wirelessly (e.g., Wi-LAN) and hence can communicate with each other.

The user manipulates the electronic apparatus (tablet PC) 100, for example, so that it instructs the video display apparatus (TV receiver) 200 to display a first image (test image 300).

Then, the user video display apparatus (TV receiver) 200 shoots the on which the first image (test image 300) is displayed together with a background, for example, using the imaging module 30 of the electronic apparatus (tablet PC) 100, for example, and obtains a shot image.

The electronic apparatus (tablet PC) 100 performs camera calibration using the first image (test image 300) in the thus-obtained shot image.

Then, the electronic apparatus (tablet PC) 100 calculates information to be used for adjusting the image quality of the video display apparatus (TV receiver) 200 using calibration results and the shot image, and sends the calculated image quality adjustment information to the video display apparatus (TV receiver) 200.

The video display apparatus (TV receiver) 200 receives the calculated image quality adjustment information, and adjusts its image quality using the received image quality adjustment information.

More specifically, when instructed to start adjustments by the user, the electronic apparatus (tablet PC) 100 acquires an operation state of the video display apparatus (TV receiver) 200 to judge whether or not the video display apparatus (TV receiver) 200 is in such a state as to be able to perform image quality adjustments and, if the judgment result is affirmative, judge its base states (step S101). The electronic apparatus (tablet PC) 100 also judges whether or not the video display apparatus (TV receiver) 200 can perform image quality adjustments (step S102).

If it is judged that the video display apparatus (TV receiver) 200 can perform image quality adjustments, the electronic apparatus (tablet PC) 100 instructs the video display apparatus (TV receiver) 200 to display, on the TV screen 8, a first image (test image 300) as a guide for camera calibration and calculation of image quality adjustment information (steps 103 and 5104).

After the first image (test image 300) is displayed on the TV screen 8, the electronic apparatus (tablet PC) 100 activates the camera shooting function and displays a shooting preview on the screen of the video display module 217 (step S105).

The user shoots the TV screen 8 together with a background in a state similar to a user viewing state (including a field of view) (step S106).

The electronic apparatus (tablet PC) 100 performs camera calibration using the first image (test image 300) that was displayed on the TV screen 8 when the image was taken (step S107).

The electronic apparatus (tablet PC) 100 calculates image quality adjustment information for the video display apparatus (TV receiver) 200 using camera calibration results and the shot image (step S108).

If satisfactory image quality adjustment information has been calculated, the electronic apparatus (tablet PC) 100 instructs the video display apparatus (TV receiver) 200 to finish the display of the first image (test image 300) (step S109).

The electronic apparatus (tablet PC) 100 requests the video display apparatus (TV receiver) 200 to make a transition to a state that image quality adjustments are possible. After completion of the transition, the electronic apparatus (tablet PC) 100 sends the calculated image quality adjustment information to the video display apparatus (TV receiver) 200 and requests the video display apparatus (TV receiver) 200 to perform image quality adjustments using the image quality adjustment information (step S110).

With this above configuration, in the embodiment, an electronic apparatus such as a smartphone or a electronic apparatus (tablet PC) 100 which is equipped with a display and a camera, for example, can cause a video display apparatus such as a video display apparatus (TV receiver) 200 to display a first image (test image) automatically and acquire installation environment information of the video display apparatus that is in a state that is close to a user viewing state.

As described above, the user can make settings for image display of the video display apparatus according to its installation environment by performing simple manipulations.

As described above, an electronic apparatus (100) according to the embodiment is provided with an imaging module (camera 30) for shooting a video display apparatus (200) on which a first image (test image 300) is displayed, and outputting a shot image; a calibrating module for performing camera calibration using the first image in the output shot image; a calculating module for calculating information to be used for image quality adjustments of the video display apparatus (200) using results of the camera calibration and the shot image; and a transmitting module for sending the calculated image quality adjustment information to the video display apparatus (200).

The electronic apparatus (100) is further provided with an instructing module for instructing the video display apparatus (200) to display the first image.

The electronic apparatus (100) is further provided with a display module 217 which enables a preview (see Fig. 1) of an image to be taken of the video display apparatus (200) on which the first image 30 is displayed.

The imaging module is provided on the back side of the display module 217 (see Fig. 1).

The first image is a test image.

The video display apparatus (200) receives the image quality adjustment information sent from the electronic apparatus (100), and performs image quality adjustments using the received image quality adjustment information.

In the embodiment, as described above, the user shoots an image which reflects a viewing environment, whereby image quality adjustments are performed according to the viewing environment.

Since camera calibration is performed automatically by, for example, the electronic apparatus (tablet PC 100) the user need not perform special manipulation for that purpose.

Since the user can acquire an image which reflects a viewing environment while viewing a shooting preview (see Fig. 1), viewing environment information can be acquired in a state that is close to a user viewing state (including a field of view).

With the above configuration, the embodiment allows a video display apparatus to perform image quality adjustments in an environment that is closer to a user viewing environment.

All the steps of each control process according to the embodiment can be implemented by software. Therefore, the advantages of the embodiment can easily be obtained merely by installing a program of each control process in an ordinary computer via a computer-readable storage medium that is stored with the program and running the installed program.

The invention is not limited to the above embodiment itself and, in the practice stage, may be embodied in such a manner that constituent elements are modified in various manners without departing from the spirit and scope of the invention. And various inventive concepts may be conceived by properly combining plural constituent elements disclosed in the embodiment. For example, several ones of the constituent elements of the embodiment may be omitted.

## Claims

1. An electronic apparatus comprising:
an imaging module configured to shoot a video display apparatus on which a first image is displayed, and output a shot image;
a calibrating module configured to perform camera calibration using the first image in the output shot image;
a calculating module configured to calculate information to be used for image quality adjustments of the video display apparatus using results of the camera calibration and the shot image; and
a transmitting module configured to transmit the calculated image quality adjustment information to the video display apparatus.

2. The electronic apparatus according to claim 1, further comprising
an instructing module configured to instruct the video display apparatus to display the first image.

3. The electronic apparatus according to claim 1 or 2, further comprising
a display module which enables a preview of an image to be taken of the video display apparatus on which the first image is displayed.

4. The electronic apparatus according to claim 3, herein
the imaging module is provided on a back side of the display module.

5. The electronic apparatus according to one of claims 1 to 4, wherein
the first image is a test image.

6. A video display apparatus which receives the image quality adjustment information sent from the electronic apparatus according to any one of claims 1 to 5, and performs image quality adjustments using the received image quality adjustment information.

7. A control method of an electronic apparatus, comprising:
shooting a video display apparatus on which a first image is displayed, and outputting a shot image;
performing camera calibration using the first image in the output shot image;
calculating information to be used for image quality adjustments of the video display apparatus using results of the camera calibration and the shot image; and
sending the calculated image quality adjustment information to the video display apparatus.

8. A recording medium for storing a control program for controlling an electronic apparatus, the control program causing the electronic apparatus to execute the steps of:
shooting a video display apparatus on which a first image is displayed, and outputting a shot image;
performing camera calibration using the first image in the output shot image;
calculating information to be used for image quality adjustments of the video display apparatus using results of the camera calibration and the shot image; and
sending the calculated image quality adjustment information to the video display apparatus.
